# EUROPEAN PATENT APPLICATION

(11) **EP 4 675 868 A1**
(43) Date of publication of application: **07.01.2026**
(21) Application number: 25153805.4
(22) Date of filing: 24.01.2025
(51) Int. Cl.: H01R 13/719, H01R 13/66

(54) **CABLE ASSEMBLY WITH INTEGRATED FILTER**

(30) Priority: 02.07.2024 US 202418762007
(71) Applicant: GE Aviation Systems Limited, Bishops Cleeve Cheltenham Gloucestershire GL52 8SF (GB); GE Aerospace Poland Sp. z o.o., 02-256 Warsaw (PL)
(72) Inventor: LI, Cong, Cheltenham, GL528SF (GB); YI, Xuan, Cheltenham, GL52 8SF (GB); YOUNSI, Karim, Cheltenham, GL52 8SF (GB); HUANG, Shenyan, Cheltenham, GL52 8SF (GB); XIONG, Han, Cheltenham, GL52 8SF (GB); HA CZEWSKI, Pawe Piotr, 2-256 Warsaw (PL); KLAUSEN, Michael, Cheltenham, GL528SF (GB)
(74) Representative: Openshaw & Co.

(57) **Abstract**

An electrical cable assembly (100) includes a cable portion (101) and a connector housing portion (102) coupled to the cable portion (101). The cable portion (101) includes a first electrical conductor (111) circumferentially surrounded by a first set of layers (120). The first set of layers (120) includes a first semiconductive layer (121a), a first insulative layer (131a), a second semiconductive layer (122a), a magnetic layer (141), a second insulative layer (132), and an electrically conductive. The connector housing portion (102) includes a connector housing (171), a printed circuit board (116) disposed within the connector housing (171); and a set of capacitors (115) mounted to the printed circuit board (116) and coupled to the magnetic layer (141).

## Description

### TECHNICAL FIELD

The present disclosure relates to electromagnetic shielding and filtering for electrical conductors. More specifically, the present disclosure relates to an electrical cable circumferentially surrounded by one or layers.

### BACKGROUND

Commercial aircraft and other applications, including industrial, commercial and residential applications, typically include an electrical power distribution system. The purpose of the electrical power distribution system is to distribute electricity to loads, protect wires and loads from hazards, and to route the most appropriate power source to each load. Such electrical power distribution systems typically include insulated shielded flexible conductive cables or rigid bus bars to transmit signals, such as power or data signals, from a source to a destination, such as a device or application. In operation, the conductive cables can be a source of electromagnetic interference that is radiated, conducted, or both.

### BRIEF DESCRIPTION OF THE DRAWINGS

In the drawings:
FIG. 1 is an isometric view of an electrical cable assembly in accordance with aspects as described herein.
FIG. 2 an isometric view of a portion of the electrical cable assembly of FIG. 1 in accordance with aspects as described herein.
FIG. 3A depicts a non-limiting aspect of the electrical cable assembly of FIG. 1, further including a toroidal electromagnetic interference filter in accordance with aspects as described herein.
FIG. 3B depicts another non-limiting aspect of the electrical cable assembly of FIG. 1 further including a toroidal electromagnetic interference filter in accordance with aspects as described herein.
FIG. 3C depicts yet another non-limiting aspect of the electrical cable assembly of FIG. 1 further including a set of toroidal electromagnetic interference filters defining a set of clamps, in accordance with aspects as described herein.
FIG. 4 depicts an end view of a cross-section of a non-limiting aspect of the cable portion of the electrical cable assembly of FIG. 1, in accordance with aspects as described herein.
FIG. 5 depicts an end view cross-section of another non-limiting aspect of the cable portion of the electrical cable assembly of FIG. 1, in accordance with aspects as described herein.
FIG. 6 depicts a flow diagram for a method of assembling the electrical cable assembly of FIG. 1, in accordance with aspects as described herein.

### DETAILED DESCRIPTION

Aspects of the present disclosure are directed to a insulated, shielded electrical conductors. For purposes of illustration, the present disclosure will be described with respect to a flexible electrical cable such as used in a power distribution system (e.g., of an aircraft). The disclosure can have applicability in a variety of electrical conductors and power distribution systems, and can be used to provide benefits in other industrial, commercial, military, and residential applications. Further non-limiting examples of other vehicles or engines to which the disclosure can relate can include boats, helicopters, cars, or other aquatic, air, space, or land vehicles. Industrial, commercial, or residential applications of the disclosure can include, but are not limited to, marine power plants, wind turbines, hybrid-electric machines, or small power plants. It will be understood, however, that the present disclosure is not so limited and can have general applicability in non-aircraft applications, such as power distribution requirements in non-aircraft power distribution applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all aspects described herein should be considered exemplary.

As used herein, the terms "first," "second," and "third" and the like, can be used interchangeably to distinguish one component from another and are not intended to signify location or importance of the individual components. The singular forms "a", "an", and "the" include plural references unless the context clearly dictates otherwise. Furthermore, as used herein, the term "set" or a "set" of elements can be any number of elements, including only one. All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present disclosure, and do not create limitations, particularly as to the position, orientation, or use of the present disclosure.

Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other.

As used herein, elements being "electrically connected," "electrically coupled," or "in signal communication" include an electric transmission or signal being sent, received, or communicated to or from such connected or coupled elements. Furthermore, such electrical connections or couplings can include a wired or wireless connection, or a combination thereof. In non-limiting examples, connections or disconnections can be selectively configured to provide, enable, disable, or the like, an electrical connection between respective elements. Non-limiting example electrical connections or disconnections can be enabled or operated by way of switching, bus tie logic, or any other connectors configured to enable or disable the energizing of an electrical load downstream of the connection. Additionally, while terms such as "voltage", "current", and "power" can be used herein, it will be evident to one skilled in the art that these terms can be interrelated when describing aspects of the electrical circuit, or circuit operations.

As used herein, the term "electrically insulative", "insulator", or "insulation" refers to a material that exhibits a low electrical conductivity (for example, less than about 10-8 siemens per meter (S/m)). Unless stated otherwise, as used herein, the term "insulative" refers to electrical insulation, and the term "insulator" refers to an electrical insulator.

As used herein, the term "conductivity" refers to a property of a material that allows a flow of charge or electric current therethrough. Also as used herein, the term "electrical conductor" refers to a material that exhibits a relatively high electrical conductivity (for example, greater than about 10-7 S/m). Unless stated otherwise, as used herein, the term "conductive" refers to electrical conductivity, and the term "conductor" refers to an electrical conductor.

As used herein, the term "semiconductive" refers to a property of a material having an electrical conductivity value falling between that of a conductor, and an insulator (for example, about 10-2 to10-4S/m). Also as used herein the term "semiconductor" refers to a semiconductive material.

As used herein, the term "ground" or "electrical ground", or "system ground" refers to a reference point in an electrical circuit from which voltages can be measured or referenced. As used herein a "ground" will provide a common return path for electric current. For example, in the context of a power system in an aircraft, in some instances, the "electrical ground" can be an internal metallic chassis, or the exterior frame of body of the aircraft itself. It will be appreciated that elements coupled to electrical ground via an electrically resistive element or impedance (e.g., a resistor) are considered electrically isolated with respect to electrical ground.

In many cases, conventional aircraft and industrial applications can be electrically noisy environments. The electrical noise can be associated with any electrical conductor charged to a non-zero potential or that is conducting an electrical current. The electrical noise can typically be either radiated or conducted, or both, as electromagnetic interference (EMI), and can disrupt the proper operation of connected and nearby equipment. Conducted EMI is coupled via conductions through parasitic impedances, power connections, and ground connections. Radiated EMI is transmitted into the surrounding environment in the form of near-field electric and magnetic fields (E fields and M fields) and far-field electromagnetic fields (EM fields). Generally, for EMI at low frequencies (e.g., below 1 Mega Hertz (MHz)) the coupling is primarily caused by conduction, for EMI at mid-frequencies (e.g., between 1 MHz and 10MHz) the coupling is primarily through near-field electric and magnetic fields, and for EMI at higher frequencies (e.g., above 10 MHz), the coupling is primarily from radiation of far field electromagnetic fields. Energy from radiated emissions can couple onto other nearby conductors and radiate into the environment.

When conducting electrical currents in a power system, an electrical cable can be a main source of transfer for EMI, both as a source and receiver. As a source, an electrical cable can either conduct EMI to nearby equipment or act as an antenna radiating noise. As a receiver, the electrical cable can receive or pick up EMI radiated from other sources.

While electrical insulation on or surrounding a central primary conductor of an electrical cable can protect the primary conductor mechanically from abrasion and environmentally from moisture, electrical insulation is typically transparent to electromagnetic energy and offers no protection or shielding from radiated EMI. Accordingly, conventional power distribution circuits often use so called "shielded cables", or "sheathed cables" to provide a shield from radiated EMI. Conventional shielded cables typically employ an outer conductive shield such as a braided metallic mesh sleeve. In some instances, radiated EMI is attenuated via a discrete ferrite bead or core (e.g., a "clamp on" ferrite bead) arranged to circumferentially surround the outer surface of the cable.

Electrical loads (e.g., electrical motors, power converters, and the like) are often energized using a power source that includes high-speed semiconductor switching devices (e.g., metal-oxide-semiconductor field-effect transistors (MOSFETs)) that rapidly switch between an on-state and off-state (e.g., a switching mode) to reduce power dissipation. Use of these devices can generate electrical noise or conducted EMI on associated electrical cables. The conducted EMI is typically expressed as a rate of change of the voltage applied to an electrical load. In some cases, the conducted EMI can cause premature insulation breakdown (e.g., a partial discharge event), and can further propagate standing waves down long cables resulting in undesired amplified voltages. Various industry standards (such as NEMA MG1 Part 31 and Part 30), limit the acceptable voltage rise time and peak voltages applied to certain electrical loads. To meet the requirements, an EMI filter can be used to suppress conducted electromagnetic noise. Such EMI filters typically employ passive components such as capacitors and inductors, coupled between the power source and the electrical load, and are sometimes referred to as "LC filters". Inductors, in an LC filter, enable low frequency or even DC signals to pass through but will block unwanted higher frequency components. Capacitors, in an LC filter, will typically direct high-frequency noise through a low-impedance path back to the power-supply ground or system ground. As such, LC filters extract any unwanted current (e.g., at predetermined frequencies) conducted through wiring or cables while allowing desirable currents to flow freely.

Because EMI filters (e.g., an LC filter) only protect against conducted EMI, they are commonly used in conjunction with shields that block radiated EMI. However, an unshielded EMI filter can still transmit electrical noise through air that can result in damage to some devices. For example, in some cases, the EMI can be emitted from a cable on one side of an EMI filter and then travel to the electrical load by recoupling with the cable on the other side. Furthermore, the EMI filters in some cases can be very large, heavy, and add significant cost to manufacture and install. Additionally, in some cases, for example where a device or electrical load (e.g., a motor drive) has been upgraded, installing new EMI filters may be difficult, requiring additional spacing in enclosures that is not easily provided.

As described in more detail herein, aspects of this disclosure can provide an electrical cable assembly suitable for current carrying operation at high-altitude, high-frequency, and high power-density applications. Aspects can include a cable having a layered structure with an integrated LC filter. For example, non-limiting aspects can include an electrical cable having a central conductor circumferentially surrounded by a set of layers including electrically insulative layers, semiconductive layers, a magnetic layer, and a conductive shield layer. The electrical cable assembly can further include a connector housing supporting a set of capacitors. The capacitors can be coupled to the magnetic layer to define the integrated LC filter. As such, aspects can reduce or eliminate the need for a conventional discrete LC filter to reduce conducted EMI, while the conductive shield layer can simultaneously provide an EMI shield to reduce radiated EMI. Furthermore, the semiconductive layers can improve the electrical insulation performance (e.g., increased partial discharge and eddy current resistance) over conventional insulation, particularly at high altitudes (e.g., over 30,000 feet above sea level). Accordingly, an electrical cable assembly can be arranged as a transmission line in power distribution system, that also functions as an EMI filter and EMI shield to attenuate conducted and radiated EMI, while reducing eddy currents, and reducing partial discharge events over conventional cables.

Reference will now be made in detail to present aspects of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

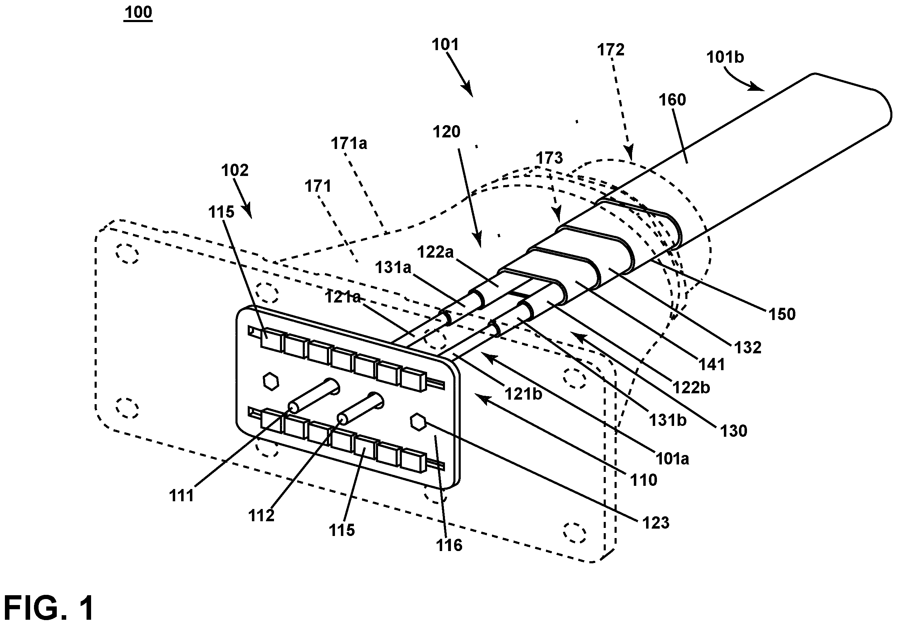

FIG. 1 illustrates an isometric view of non-limiting example aspect of an electrical cable assembly 100. The electrical cable assembly 100 includes an elongate cable portion 101 extending from a first end 101a to an opposing second end 101b, and a housing portion 102 coupled to the cable portion 101 at the first end 101a. The cable portion 101 includes a set of electrical conductors 110 extending from the first end 101a to the second end 101b. The set of electrical conductors 110 can include a first electrical conductor 111 and a second electrical conductor 112. The cable portion 101 is formed with multiple concentric layers or sleeves circumferentially surrounding the set of electrical conductors 110, portions of which are omitted from FIG. 1 for clarity. That is, for illustrative purposes only, electrical cable assembly 100 is shown as a telescopic assembly by peeling away or omitting portions of subsequent layers of the electrical cable assembly 100.

For example, the first electrical conductor 111 can be circumferentially surrounded by a concentric first set of layers 120, and the second electrical conductor 112 can be circumferentially surrounded by a concentric second set of layers 130.

The concentric first set of layers 120 can include a respective first semiconductive layer 121a, a respective first insulative layer 131a, a respective second semiconductive layer 122a, a magnetic layer 141, a second insulative layer 132, an electrically conductive sleeve 150, and an outer insulative sleeve 160.

The concentric second set of layers 130 can include a respective third semiconductor layer 121b, a respective third insulative layer 131b, a respective fourth semiconductive layer 122b, the magnetic layer 141, the second insulative layer 132, the electrically conductive sleeve 150, and the outer insulative sleeve 160.

The respective first semiconductive layer 121a, and third semiconductive layer 121b can circumferentially surround the first electrical conductor 111 and the second electrical conductor 112, respectively. The respective first insulative layer 131a, and third insulative layer 131b can circumferentially surround the respective first semiconductive layer 121a, and third semiconductive layer 121b, respectively. The respective second semiconductive layer 122a, and fourth semiconductive layer 122b can circumferentially surround the respective first insulative layer 131a, and third insulative layer 131b, respectively. The magnetic layer 141 can circumferentially surround the respective second semiconductive layer 122a, and fourth semiconductive layer 122b. The second insulative layer 132 can circumferentially surround the magnetic layer 141. The electrically conductive sleeve 150 can circumferentially surround the second insulative layer 132. The outer insulative sleeve 160 can circumferentially surround the electrically conductive sleeve 150.

The first electrical conductor 111 and second electrical conductor 112 can each include a flexible conductor such as a solid cable, or multi-strand cable, and the like. While the first electrical conductor 111 and the second electrical conductor 112 will be described herein in terms of a flexible conductor, other aspects are not so limited. For example, in other aspects, the first electrical conductor 111 and second electrical conductor 112 can each include a rigid conductor such as a bus bar, without departing from the scope of the disclosure. The first electrical conductor 111 and second electrical conductor 112 can be formed with any desired electrically conductive material or alloy, such as copper or aluminum.

The electrically conductive sleeve 150 can comprise a foil sleeve, a braided metallic mesh, or the like. The foil sleeve can comprise a relatively thin layer of a conductor (e.g., aluminum), attached to an insulative carrier (e.g., polyester), and circumferentially surrounds the primary conductor or wire. Alternatively, the braided metallic mesh can comprise a woven mesh formed as a tubular sheath of bare or tinned copper wires. It is contemplated that a low-impedance drain wire (not shown) can optionally be coupled to the electrically conductive sleeve 150 to electrically couple or short-circuit the conductive sleeve directly to directly to an electrical ground (e.g., a chassis ground).

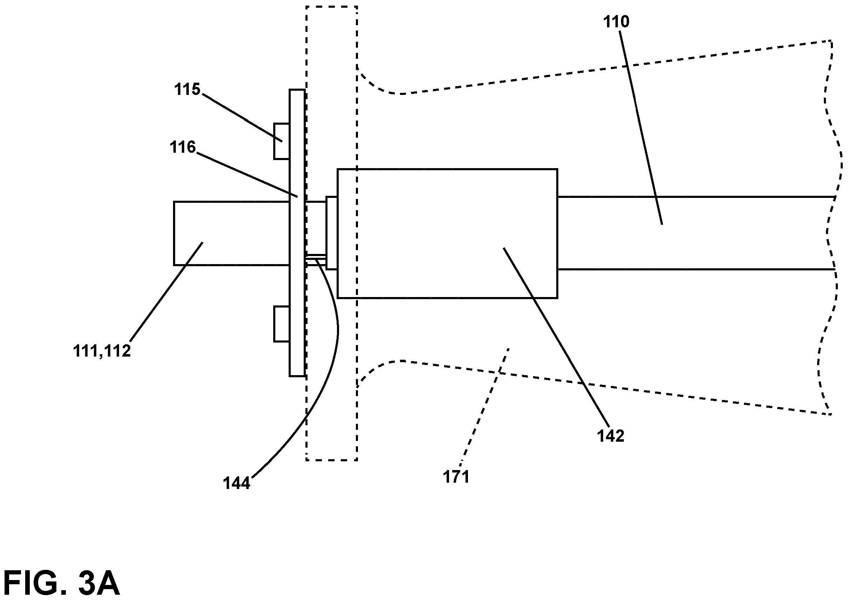

The connector housing portion 102 can include a connector housing 171, shown in phantom-view in FIG. 1. The connector housing 171 can be formed of any desired material, such as a metal (e.g., aluminum, steel, and the like). In other aspects, the connector housing can be formed of an insulative material (e.g., polyester). The connector housing 171 can include a connector housing surface 171a surrounding defining an interior cavity 173. An aperture 172 defined through the connector housing surface 171a can extend to the interior cavity 173 and be fluidly coupled thereto. The cable portion 101 can be received into interior cavity 173. For example, the first end 101a can be received into the interior cavity 173 via the aperture 172. In non-limiting aspects, the connector housing portion 102 can further include a set of capacitors 115. The connector housing 171 can support the set of capacitors 115. For example, the set of capacitors 115 can be mounted on a printed circuit board (PCB) 116, and in non-limiting aspects, the PCB 116 can be supportably mounted on or within the connector housing 171. For example, in some aspects, the PCB 116 can be fastened to the connector housing 171 via a set of mechanical fasteners 123 (e.g., screws). Other aspects are not so limited, and the PCB 116 can be disposed in any desired location, including remote from the connector housing 171, and in any desired orientation. In non-limiting aspects, the magnetic layer 141 can be electrically coupled to the set of capacitors 115, for example via a conductive line 144 (shown in FIG. 3A).

The set of capacitors 115 can comprise discrete capacitors having any desired dielectric material, and can include electrolytic capacitors, ceramic capacitors, wound-film capacitors, and combinations thereof. For example, in non-limiting aspects, the set of capacitors 115 can be compact high-voltage ceramic capacitors. In various aspects, the capacitance value of each capacitor 115 can be fixed (e.g., 1 microFarad) or can have an adjustable capacitance value.

While the aspect of FIG. 1 depicts the cable portion 101 having two electrical conductors 110 (e.g., the first electrical conductor 111 and the second electrical conductor 112), other aspects are not so limited. In other non-limiting aspects, the set of electrical conductors 110 can include any desired number of electrical conductors 110, including only one. For example, in other non-limiting aspects the set of electrical conductors can include three electrical conductors (not shown), such as for three-phase electrical systems.

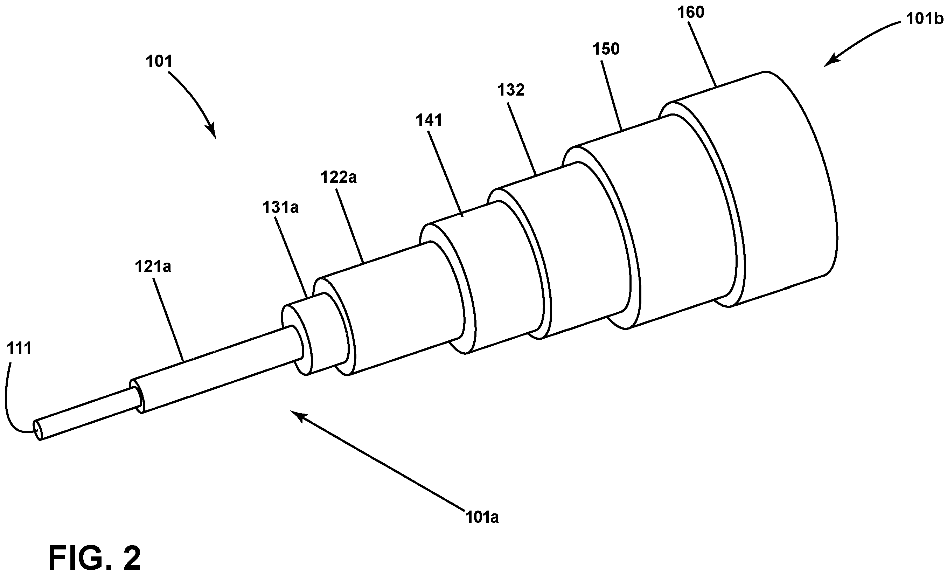

For example, FIG. 2 depicts a non-limiting aspect of the cable portion 101 having only one electrical conductor 110 (i.e., the first electrical conductor 111) with the connector portion omitted for clarity. The first electrical conductor 111 extends from the first end 101a to the second end 101b, and is circumferentially surrounded by a concentric first set of layers 120, portions of which are omitted from FIG. 2 for clarity, extending from the first end 101a to the second end 101b.

The concentric first set of layers 120 includes the first semiconductive layer 121a, the first insulative layer 131a, the second semiconductive layer 122a, the magnetic layer 141, the second insulative layer 132, the electrically conductive sleeve 150, and the outer insulative sleeve 160.

FIG. 3A depicts another non-limiting aspect of the electrical cable assembly 100, that further includes a toroidal EMI filter 142 disposed within the connector housing 171 and arranged to circumferentially surround the cable portion 101. In non-limiting aspects, the toroidal EMI filter 142 can comprise a ferrite core or ferrite bead. For example, in non-limiting aspects, the ferrite bead can be formed of ferrite, nanocrystalline, or soft magnetic composite (SMC) material. In other non-limiting aspects, the toroidal EMI filter 142 can comprise a radiofrequency (RF) inductor. For example, in one non-limiting aspect, the toroidal EMI filter 142 can be a 1.5 microhenry (uH) inductor. The toroidal EMI filter 142 can be disposed within the connector housing 171.

As shown, the conductive line 144 can electrically couple the set of capacitors and the magnetic layer 141. For example, in some aspects, the conductive line 144 can be coupled to the magnetic layer, and further coupled to a trace (not shown) on the PCB 116, and the trace further coupled to the set of capacitors 115.

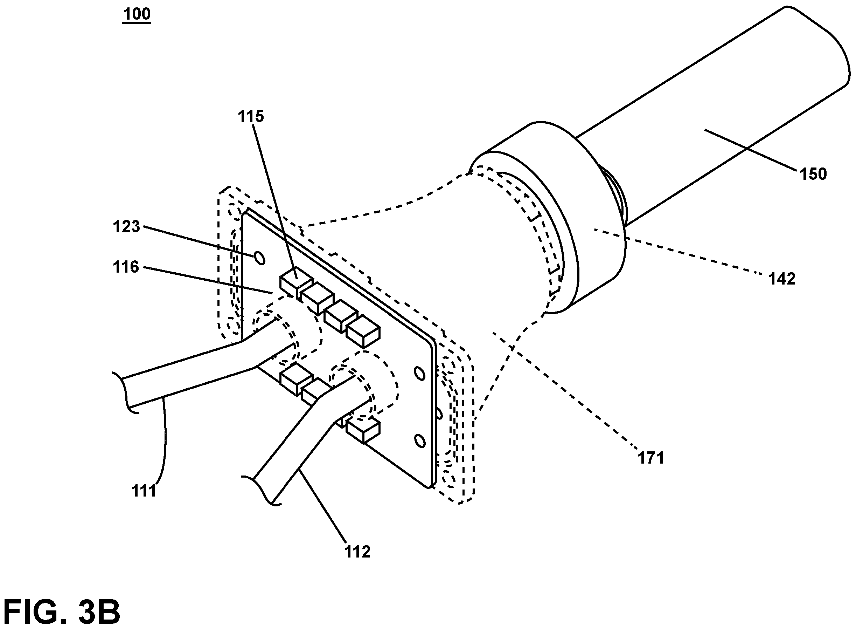

FIG. 3B depicts yet another non-limiting aspect of the electrical cable assembly 100 having the toroidal EMI filter 142 disposed external to the connector housing 171, and between the connector housing 171 and the electrically conductive sleeve 150.

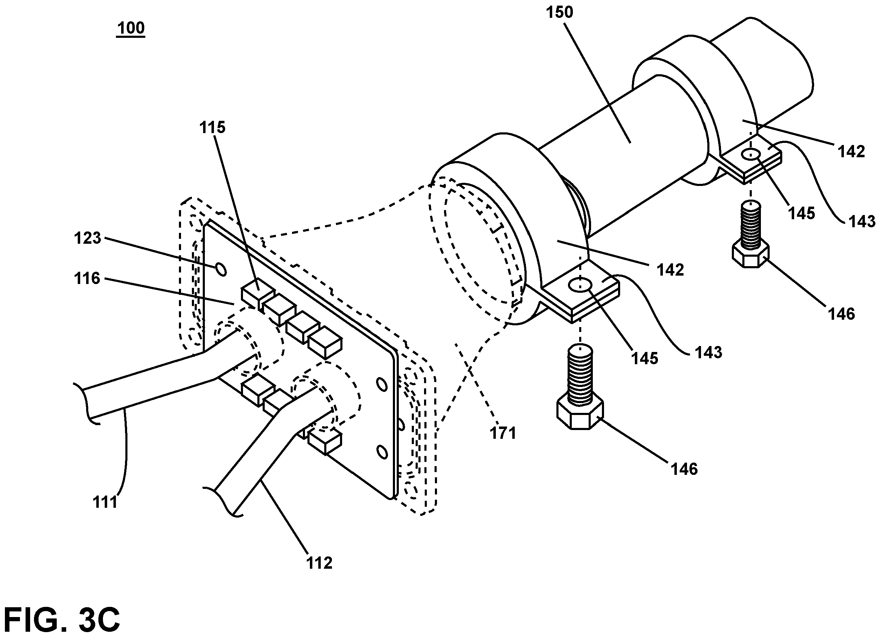

In some aspects, the toroidal EMI filter 142 can be arranged as a set of toroidal EMI filters 142. For example, rather than a single toroidal EMI filter 142, ferrite or other soft ferromagnetic material can be arranged to form multiple toroidal EMI filters 142 instead of single one. FIG. 3C depicts yet another non-limiting aspect of the electrical cable assembly 100 having a set of toroidal EMI filters 142 disposed external to the connector housing 171, spaced from each other along a length and circumferentially surrounding, the cable portion 101. The toroidal EMI filters 142 can be spaced from each other along a length of the cable portion 101. In non-limiting aspects, one or more of the set of toroidal EMI filters 142 can be configured to further define a mechanical clamp arranged to retain or couple the cable portion 101 to an external surface such as a mounting surface (not shown). For example, in some aspects, one or more toroidal EMI filters can include a protrusion or tab portion 143. The tab portion 143 can define an aperture 145 sized to receive a mechanical fastener 146 (e.g., screw) therethrough. In this way, the toroidal EMI filter 142 can couple the electrical cable assembly 100 to an external structure.

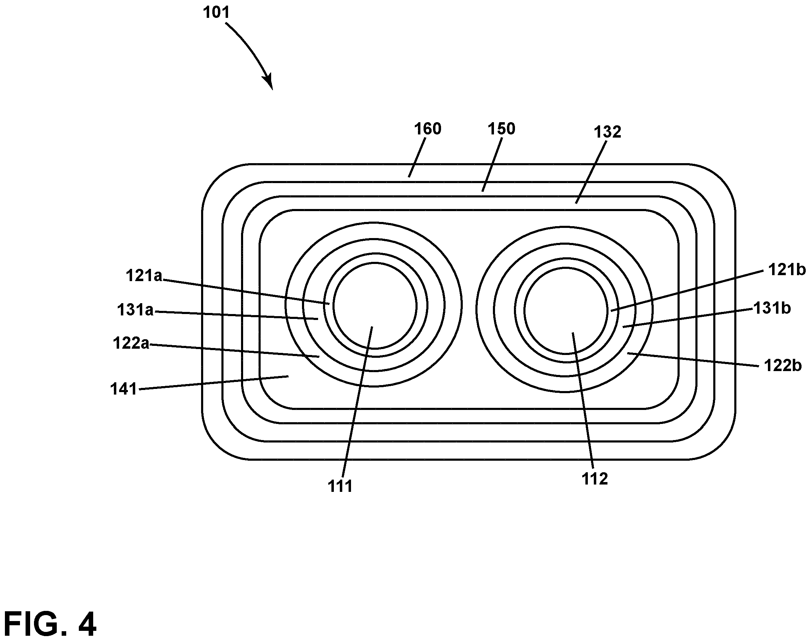

FIG. 4 depicts an end view cross-section of the cable portion 101 of a non-limiting aspect of the electrical cable assembly 100 of FIG. 1, including the first electrical conductor 111 and the second electrical conductor 112. The first electrical conductor 111, respective first semiconductive layer 121a, respective first insulative layer 131a, and respective second semiconductive layer 122a can be concentrically arranged. The second electrical conductor 112, respective third semiconductive layer 121b, respective third insulative layer 131b, and respective fourth semiconductive layer 122b can be concentrically arranged.

The respective first insulative layer 131a, and third insulative layer 131b, second insulative layer 132, and outer insulative sleeve 160 can each be formed of any desired electrically insulative or dielectric material. In non-limiting aspects, the respective first insulative layer 131a, and third insulative layer 131b and second insulative layer 132 can be formed of high or low density polyethylene, and can be crosslinked or un-crosslinked. For example, in various aspects, the respective first insulative layer 131a, and third insulative layer 131b and second insulative layer 132, outer insulative sleeve 160 can be formed of any polyvinyl chloride (PVC), crosslinked polyethylene (XLPE), high modulus Ethylene-Propylene (HEPR), Ethylene-Propylene (EPR), and combinations thereof.

The respective first semiconductive layer 121a, and third semiconductive layer 121b and the respective second semiconductive layer 122a, and fourth semiconductive layer 122b can be formed of a polymer matrix (e.g., ethylene copolymers) with an electrically conductive filler, for example carbon black dispersed within the polymer matrix. The copolymer forming the respective first semiconductive layer 121a, and third semiconductive layer 121b and the respective second semiconductive layer 122a, and fourth semiconductive layer 122b can be considered a "carrier", but also adhere to the respective first insulative layer 131a, and third insulative layer 131b and second insulative layer 132, respectively. The polymer matrix can include polar groups such as hydrophilic groups, (e.g., a copolymer of ethylene and acrylate alkyl). The concentration of carbon black can be selected to provide a desired conductivity or resistivity. For example, in non-limiting aspects, the resistivity of the respective first semiconductive layer121a, and third semiconductive layer 121b and the respective second semiconductive layer 122a, and fourth semiconductive layer 122b can be less than 100 milliohms.

The magnetic layer 141 can circumferentially surround the respective second semiconductive layer 122a, and fourth semiconductive layer 122b along a longitudinal extent of the first electrical conductor 111 and the second electrical conductor 112, for example from the first end 101a to the second end 101b (FIG. 1). In some aspects, the magnetic layer 141 can be formed from a polymer-based composite having soft magnetic particles or powder. For example, in non-limiting aspects the magnetic layer 141 can be formed of, without limitation" iron, silicon steel (e.g., iron silicide (FeSi)), nickel-iron (Ni-Fe) alloys, iron pentacarbonyl (FeCo) alloys, soft ferrites (e.g., manganese ferrites such as manganese zinc (MnZn) ferrite, nickel-zinc (Ni-Zn) ferrite), amorphous or nanocrystalline alloys/composites (e.g., iron (Fe) or cobalt (Co)) based alloys or composites), or the like having a relatively high magnetic permeability infused or otherwise dispersed therein. The magnetic particles can be, without limitation, iron, silicon steel (e.g., Fe6.5Si), Ni-Fe alloys, FeCo alloys, soft ferrites (e.g., MnZn ferrite, Ni-Zn ferrite), amorphous or nanocrystalline alloys/composites (Fe-based, Co-based), or the like having a relatively high magnetic permeability. The morphology of the magnetic particles can include but are not limited to spherical, irregular, flaky, fiber, and the like. For example, the magnetic layer 141 can have a permeability greater than 10 microhenries per meter (uH/m). It is contemplated that the amount and size of the magnetic particles dispersed in the polymer-based composite material can be varied as necessary to achieve a desired or predetermined performance characteristic of the magnetic layer 141. For example, in non-limiting aspects, the magnetic layer 141 can be arranged to have a cutoff frequency greater than 1 megahertz. In some non-limiting aspects, the magnetic layer 141 can be arranged to have a DC saturation level of greater than 1 tesla (e.g., 1.5 teslas). As such the magnetic layer 141 can define an inductive element that extends from the first end 101a to the second end 101b (FIG. 1). It is contemplated that in non-limiting aspects, the magnetic layer 141 can be a coating of magnetic particles or powder, disposed on the respective second semiconductive layer 122a, and fourth semiconductive layer 122b.

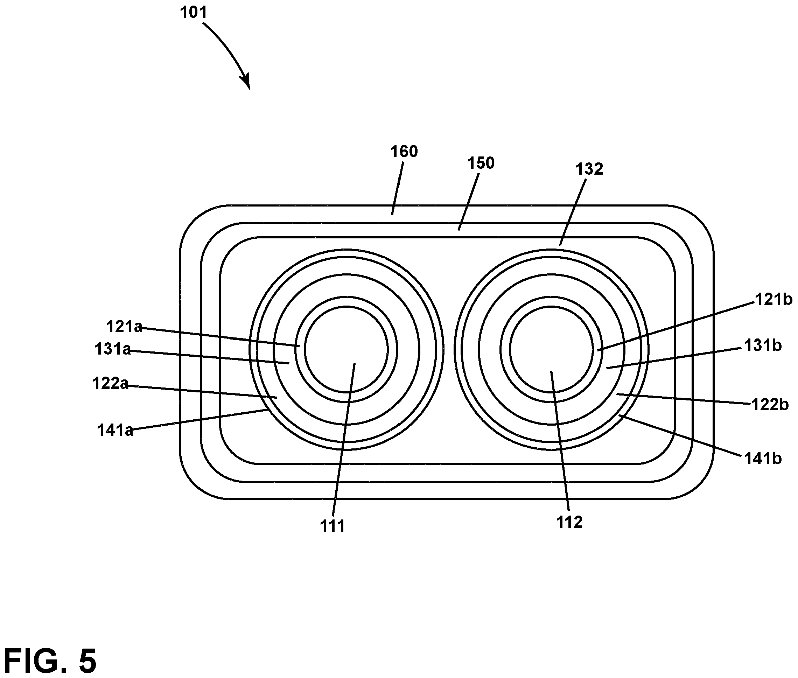

FIG. 5 depicts another end view cross-section of another non-limiting aspect of the cable portion 101 of the electrical cable assembly 100 of FIG. 1, in which the magnetic layer 141 is defined by a respective magnetic layer 141a, 141b circumferentially surrounding each respective second semiconductive layer 122a, and fourth semiconductive layer 122b. The respective magnetic layer 141a, 141b can be defined by a respective coating of magnetic particles disposed on each respective second semiconductive layer 122a, and fourth semiconductive layer 122b.

The respective magnetic layer 141a, 141b can circumferentially surround the respective second semiconductive layer 122a, and fourth semiconductive layer 122b along a longitudinal extent of the first electrical conductor 111 and the second electrical conductor 112, for example from the first end 101a to the second end 101b (FIG. 1). It is contemplated that the amount and size of the magnetic particles disposed on each respective second semiconductive layer 122a, and fourth semiconductive layer 122b can be varied as necessary to achieve a predetermined permeability of each respective magnetic layer 141a, 141b. As such, the respective magnetic layer 141a, 141b, can define an inductive element that extends from the first end 101a to the second end 101b (FIG. 1).

Aspects as described herein provide an electrical cable having a multilayer structure to simultaneously enable EMI shielding, EMI filtering, eddy current reduction, high-voltage and/or high-altitude insulation with partial discharge protection, to provide improved performance and ampacity over conventional cables when conducting current.

For example, during operation (e.g., when an electrical current flows through the first electrical conductor 111 or the second electrical conductor 112, or both), the electrically conductive sleeve 150 can define a low-impedance path (e.g., short-circuit) to the electrical ground. In this way, the electrically conductive sleeve 150 operates as an EMI shield by reducing radiated EMI by reflecting the radiated energy, conducting it to ground, or both.

Additionally, in operation, the respective first semiconductive layer 121a, and third semiconductive layer 121b can provide a smooth interface between the first electrical conductor 111 and the second electrical conductor 112, respectively, to decreases the occurrence of high voltage stress regions, limit injection of space charges in the adjacent respective first insulative layer 131a, and third insulative layer 131b, and prevent partial discharge events particularly during operation at high altitude, or at relatively high voltages (e.g., 10 kilovolts). Similarly, in operation, the respective second semiconductive layer 122a, and fourth semiconductive layer 122b can provide a smooth interface between the magnetic layer 141 to further reduce high voltage stress regions and limit the injection of space charges in the adjacent second insulative layer 132 and prevent partial discharge events particularly during operation at high altitude, or at relatively high voltages.

Furthermore, in operation, the magnetic layer 141, or the respective magnetic layer 141a, 141b, (FIGS. 4-5), are arranged to extend substantially parallel to magnetic field lines (not shown) caused by electrical current flowing through the first electrical conductor 111 or the second electrical conductor 112, or both, and can operatively reduce or prevent eddy current generation. Additionally, the magnetic layer 141, or the respective magnetic layer 141a, 141b, can reduce the inherent shielding loss of the electrically conductive sleeve 150 (e.g., greater than 50% shielding loss reduction).

Further still, the magnetic layer 141, or the respective magnetic layer 141a, 141b, and the set of capacitors 115 being electrically coupled, cooperatively act as an LC filter to suppress conducted EMI. In non-limiting aspects, the magnetic layer 141, or the respective magnetic layer 141a, 141b, can further cooperate with the optional toroidal EMI filter 142 to further filter radiated EMI at predetermined frequencies.

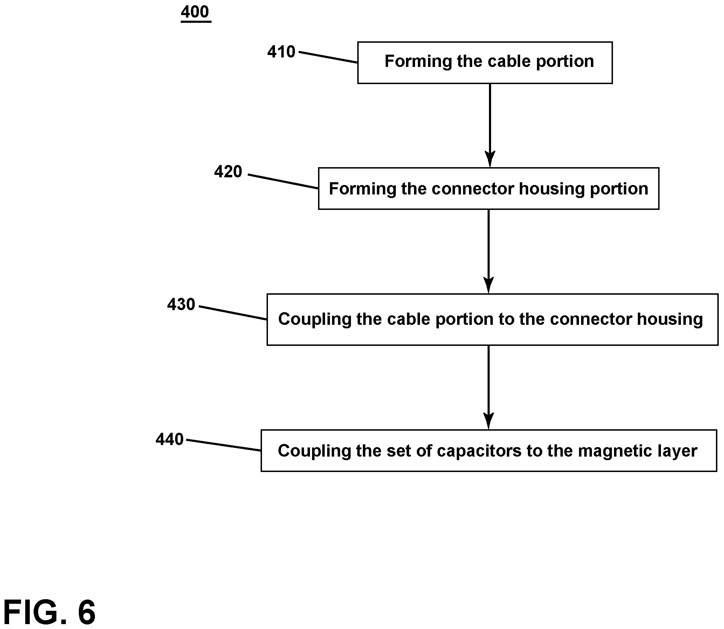

FIG. 6 illustrates a non-limiting example of a method 400 of fabricating an electrical cable assembly 100. While the method 400 will be described, for ease of understanding, with reference to the electrical cable assembly 100 described with reference to FIGS. 1-5, aspects of the method 400 are not so limited and can be implemented in other cable assemblies without departing from the scope of the disclosure.

The electrical cable assembly 100 can include the cable portion 101 and the connector housing portion 102. The cable portion 101 can include the first electrical conductor 111 extending from the first end 101a and the opposing second end 101b.

The method 400 can begin at 410, by forming the cable portion 101. In non-limiting aspects, the forming the cable portion 101 can include circumferentially surrounding the electrical conductor 110 with the first set of concentric layers extending from the first end 101a to the second end 101b. The set of layers can include, the first semiconductive layer 121a, the first insulative layer 131a, the second semiconductive layer 122a; the magnetic layer 141, the second insulative layer 132, and the electrically conductive sleeve 150.

In some aspects, the cable portion 101 can further include the second electrical conductor 112 extending from the first end 101a to the opposing second end 101b. In such aspects, the forming the cable portion can further include circumferentially surrounding the second electrical conductor 112 with the second set of concentric layers extending from the first end 101a to the second end 101b wherein the second set of concentric layers includes the respective third semiconductive layer 121b, the respective third insulative layer 131b, and the respective third semiconductive layer 122b. The magnetic layer 141, the second insulative layer 132, and the electrically conductive sleeve 150 can circumferentially surround the respective fourth semiconductive layer semiconductive layer 122b.

In non-limiting aspects, the forming the cable portion 101 can further include disposing the toroidal EMI filter 142 to circumferentially surround the second insulative layer 132, external to the connector housing 171 between connector housing 171 and the electrically conductive sleeve 150. The toroidal EMI filter 142 can comprise one of a ferrite bead or an inductor.

The method 400 can include, at 420, forming the connector housing portion 102. In non-limiting aspects, the forming the connector housing portion 102 includes disposing the PCB 116 including the set of capacitors 115 within the connector housing 171. In non-limiting aspects, the forming the connector housing portion 102 can further include disposing the toroidal EMI filter 142 to circumferentially surround the second insulative layer 132 within the connector housing 171.

The method 400 can include, at 430, coupling the cable portion 101 to the connector housing 171 at the first end 101a, and at 440 coupling the set of capacitors 115 to the magnetic layer 141.

The sequence depicted are for illustrative purposes only and is not meant to limit the method 400 in any way as it is understood that the portions of the method can proceed in a different logical order, additional or intervening portions can be included, or described portions of the method can be divided into multiple portions, or described portions of the methods can be omitted without detracting from the described method. For example, the method 400 can include various other intervening steps. The examples provided herein are meant to be non-limiting.

To the extent not already described, the different features and structures of the various aspects may be used in combination with each other as desired. That one feature may not be illustrated in all of the aspects is not meant to be construed that it may not be, but is done for brevity of description. Thus, the various features of the different embodiments may be mixed and matched as desired to form new embodiments, whether or not the new embodiments are expressly described. All combinations or permutations of features described herein are covered by this disclosure.

This written description uses examples, including the best mode, and to enable any person skilled in the art to practice the present disclosure, including making and using any devices or systems and performing any incorporated methods. The patentable scope of the present disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various characteristics, aspects and advantages of the present disclosure may also be embodied in any permutation of aspects of the disclosure, including but not limited to the following technical solutions as defined in the enumerated aspects:

An electrical cable assembly comprising: a cable portion having a first end and an opposing second end, and a connector housing portion, wherein the cable portion includes: a first electrical conductor extending from the first end to the second end, circumferentially surrounded by a first set of layers extending from the first end to the second end, the first set of layers including: a first semiconductive layer circumferentially surrounding the first electrical conductor; a first insulative layer circumferentially surrounding the first semiconductive layer; a second semiconductive layer circumferentially surrounding the first insulative layer; a magnetic layer circumferentially surrounding the second semiconductive layer; a second insulative layer circumferentially surrounding the magnetic layer; an electrically conductive sleeve circumferentially surrounding the second insulative layer; wherein the connector housing portion includes a connector housing coupled to the first end of the cable portion; a printed circuit board (PCB) coupled to the connector housing; and a set of capacitors mounted to the PCB and coupled to the magnetic layer.

The electrical cable assembly of the preceding clause, wherein the PCB is disposed within the connector housing.

The electrical cable assembly of any preceding clause, further including an insulative sleeve circumferentially surrounding the electrically conductive sleeve.

The electrical cable assembly of any preceding clause, further comprising a second electrical conductor extending from the first end to the second end, and coupled at the first end to the set of capacitors, being circumferentially surrounded by a second set of layers extending from the first end to the second end, the second set of layers including: a respective third semiconductive layer circumferentially surrounding the second electrical conductor; a respective third insulative layer circumferentially surrounding the third semiconductive layer; and a respective fourth semiconductive layer circumferentially surrounding the third insulative layer, wherein the magnetic layer, the second insulative layer; and the electrically conductive sleeve circumferentially surround the respective fourth semiconductive layer.

The electrical cable assembly of any preceding clause, wherein the magnetic layer is defined by a coating of magnetic particles disposed on the second semiconductive layer.

The electrical cable assembly of any preceding clause, wherein the magnetic layer comprises a polymer-based composite material having magnetic particles dispersed therein.

The electrical cable assembly of any preceding clause, including a toroidal electromagnetic interference (EMI) filter circumferentially surrounding the second semiconductive layer.

The electrical cable assembly of any preceding clause, wherein the toroidal EMI filter defines an aperture configured to receive a mechanical fastener therethrough for coupling the cable assembly to an external structure.

The electrical cable assembly of any preceding clause, wherein the toroidal EMI filter comprises one of a ferrite bead or an inductor.

The electrical cable assembly of any preceding clause, wherein the toroidal EMI filter is disposed in the connector housing.

The electrical cable assembly of any preceding clause, wherein the toroidal EMI filter is disposed external to the connector housing, between connector housing and the electrically conductive sleeve.

A method of fabricating an electrical cable assembly including a cable portion and a connector housing portion, the method comprising: forming the cable portion having a first electrical conductor extending from a first end and an opposing second end, wherein the forming includes circumferentially surrounding the first electrical conductor with a first set of layers extending from the first end to the second end, the first set of layers including a first semiconductive layer, a first insulative layer, a second semiconductive layer; a magnetic layer, a second insulative layer; and an electrically conductive sleeve; forming the connector housing portion, wherein the forming includes coupling a PCB having a set of capacitors mounted thereon to a connector housing; coupling the cable portion to the connector housing at the first end; and coupling the set of capacitors to the magnetic layer.

The method of any preceding clause, wherein the coupling the PCB to the connector housing includes disposing the PCB within the connector housing.

The method of any preceding clause, wherein the first set of layers further includes an insulative sleeve circumferentially surrounding the electrically conductive sleeve.

The method of any preceding clause, wherein the cable portion further includes a second electrical conductor extending from the first end to the opposing second end, wherein the forming the cable portion further includes circumferentially surrounding the second electrical conductor with a second set of layers extending from the first end to the second end, the second set of layers including a respective third semiconductive layer, a respective third insulative layer, a respective fourth semiconductive layer, wherein the magnetic layer, the second insulative layer; and the electrically conductive sleeve circumferentially surround the respective fourth semiconductive layer.

The method of any preceding clause, wherein the magnetic layer is defined by a coating of magnetic particles disposed on the second semiconductive layer.

The method of any preceding clause, wherein the magnetic layer comprises a polymer-based composite material having magnetic particles dispersed therein.

The method of any preceding clause, wherein the forming the connector housing portion further includes disposing a toroidal EMI filter to circumferentially surround the second semiconductive layer within the connector housing.

The method of any preceding clause, wherein the toroidal EMI filter comprises one of a ferrite bead or inductor.

The method of any preceding clause, wherein the forming the cable portion further includes disposing a toroidal EMI filter to circumferentially surround the second semiconductive layer external to the connector housing between connector housing and the electrically conductive sleeve.

## Claims

1. An electrical cable assembly (100) comprising:
a cable portion (101) having a first end (101a) and an opposing second end (101b), and a connector housing portion (102) having a connector housing (171) coupled to the first end of the cable portion (101), wherein the cable portion (101) includes:
a first electrical conductor (111) extending from the first end (101a) to the second end (101b), the first electrical conductor (111) circumferentially surrounded by a first set of layers (120) extending from the first end (101a) to the second end (101b), the first set of layers (120) including:
a first semiconductive layer (121a) circumferentially surrounding the first electrical conductor (111);
a first insulative layer (131a) circumferentially surrounding the first semiconductive layer (121a);
a second semiconductive layer (122a) circumferentially surrounding the first insulative layer (121a);
a magnetic layer (141) circumferentially surrounding the second semiconductive layer (122a);
a second insulative layer (132) circumferentially surrounding the magnetic layer (141);
an electrically conductive sleeve (150) circumferentially surrounding the second insulative layer (132);
a printed circuit board (PCB) (116) coupled to the connector housing (171); and
a set of capacitors (115) mounted to the PCB (116) and coupled to the magnetic layer (141).

2. The electrical cable assembly (100) of claim 1, wherein the PCB (116) is disposed within the connector housing (171).

3. The electrical cable assembly (100) of any preceding claim, further including an insulative sleeve circumferentially surrounding the electrically conductive sleeve (150).

4. The electrical cable assembly (100) of any preceding claim, further comprising a second electrical conductor (112) extending from the first end (101a) to the second end (101b), and coupled at the first end (101a) to the set of capacitors (115), being circumferentially surrounded by a second set of layers (130) extending from the first end (101a) to the second end (101b), the second set of layers (130) including:
a respective third semiconductive layer (121b) circumferentially surrounding the second electrical conductor (112);
a respective third insulative layer (131b) circumferentially surrounding the third semiconductive layer (121b); and
a respective fourth semiconductive layer (122b) circumferentially surrounding the third insulative layer (131b), wherein the magnetic layer (141), the second insulative layer (132); and the electrically conductive sleeve (150) circumferentially surround the respective fourth semiconductive layer (122b).

5. The electrical cable assembly (100) of any preceding claim, wherein the magnetic layer (141) is defined by a coating of magnetic particles disposed on the second semiconductive layer (122a).

6. The electrical cable assembly (100) of any preceding claim, wherein the magnetic layer (141) comprises a polymer-based composite material having magnetic particles dispersed therein.

7. The electrical cable assembly (100) of any preceding claim, including a toroidal electromagnetic interference (EMI) filter (142) circumferentially surrounding the second semiconductive layer (122a).

8. The electrical cable assembly (100) of claim 7, wherein the toroidal EMI filter (142) is disposed in the connector housing (171).

9. The electrical cable assembly (100) of claim 7, wherein the toroidal EMI filter (142) is disposed external to the connector housing (171), between the connector housing (171) and the electrically conductive sleeve (150).

10. A method of fabricating an electrical cable assembly (100) including a cable portion (101) and a connector housing portion (102), the method comprising:
forming the cable portion (101) having a first electrical conductor (111) extending from a first end (101a) and an opposing second end (101b), wherein the forming includes circumferentially surrounding the first electrical conductor (111) with a first set of layers (120) extending from the first end (101a) to the second end (101b), the first set of layers (120) including a first semiconductive layer (121a), a first insulative layer (131a), a second semiconductive layer (122a); a magnetic layer (141), a second insulative layer (132); and an electrically conductive sleeve (150);
forming the connector housing portion (102), wherein the forming includes coupling a PCB (116) having a set of capacitors (115) mounted thereon to a connector housing (171);
coupling the cable portion (101) to the connector housing (171) at the first end; and
coupling the set of capacitors (115) to the magnetic layer (141).

11. The method of claim 10, wherein the coupling the PCB (116) to the connector housing (171) includes disposing the PCB (116) within the connector housing (171).

12. The method of claim 10 or 11, wherein the cable portion (101) further includes a second electrical conductor (112) extending from the first end (101a) to the opposing second end (101b), wherein the forming the cable portion (101) further includes circumferentially surrounding the second electrical conductor (112) with a second set of layers (130) extending from the first end (101a) to the second end (101b), the second set of layers (130) including a respective third semiconductive layer (121b), a respective third insulative layer (131b), a respective fourth semiconductive layer (122b), wherein the magnetic layer (141), the second insulative layer (132); and the electrically conductive sleeve (150) circumferentially surround the respective fourth semiconductive layer (122b).

13. The method of any of claims 10 to 12, wherein the magnetic layer (141) is defined by a coating of magnetic particles disposed on the second semiconductive layer (122a).

14. The method of any of claims 10 to 13, wherein the magnetic layer (141) comprises a polymer-based composite material having magnetic particles dispersed therein.

15. The method of any of claims 10 to 14, wherein the forming the connector housing portion (102) further includes disposing a toroidal EMI filter (142) to circumferentially surround the second semiconductive layer (122a) within the connector housing (171).
